# EUROPÄISCHE PATENTSCHRIFT

(11) **EP 3 517 431 B1**
(45) Veröffentlichungstag und Bekanntmachung des Hinweises auf die Patenterteilung: **29.07.2020**
(21) Anmeldenummer: 19153266.2
(22) Anmeldetag: 23.01.2019
(51) Int. Cl.: B64C 25/32, B64C 25/52, B64C 25/66

(54) **BODENMANÖVRIERVORRICHTUNG MIT EINER HYDRAULIKEINRICHTUNG**
FLOOR MANOEUVRING DEVICE WITH A HYDRAULIC DEVICE
DISPOSITIF DE MANEUVRE DU SOL DOTÉ D'UN AGENCEMENT HYDRAULIQUE

(30) Priorität: 30.01.2018 CH 1052018
(43) Veröffentlichungstag der Anmeldung: 31.07.2019
(73) Patentinhaber: kopter group ag, 8753 Mollis (CH)
(72) Erfinder: Donno, Cosimo, 8422 Pfungen (CH)
(74) Vertreter: Schneider Feldmann AG Patent- und Markenanwälte

(56) Entgegenhaltungen:
- CN-A- 106 494 637
- GB-A- 2 042 990
- US-A- 3 279 722
- US-A- 4 600 168

## Beschreibung

### Technisches Gebiet

Die Erfindung betrifft eine Bodenmanövriervorrichtung zum Aufbocken jeweils einer Kufe eines Landegestells eines Helikopters, um diesen am Boden zu rangieren, umfassend ein Gehäuse mit einer Befestigungsvorrichtung, an der zugfest eine Kufe befestigt werden kann, eine Hydraulikeinrichtung mit einem ausfahrbaren Kolben und einer ersten Angriffswelle, an der ein Hebel zur Übertragung eines Drehmoments schwenkbar angebracht ist, sodass beim Wippen des Hebels der Kolben aus der Hydraulikeinrichtung ausgefahren wird und wobei die Hydraulikeinrichtung derart beweglich im Gehäuse angebracht ist, dass das Gehäuse bei ausfahrendem Kolben vertikal nach oben gestemmt wird, sowie je ein äusseres und ein inneres Rad an zwei fluchtenden horizontalen Achsen an gegenüberliegenden Seiten an der Hydraulikeinrichtung, die nach dem Befestigen des Gehäuses an der Kufe innerhalb resp. ausserhalb neben dieser angeordnet sind.

### Stand der Technik

Helikopter verfügen in der Regel über ein Landegestell, das mit zwei Kufen ausgestattet ist. Diese verlaufen parallel zur Flugrichtung und gewähren dem Helikopter einen guten Stand auf dem Boden. Zum Manövrieren, beispielsweise wenn der Helikopter in einen Hangar gebracht werden soll, muss er resp. sein Fahrgestell auf eine dafür geeignete Vorrichtung aufgebockt werden, hier Bodenmanövriervorrichtungen genannt.

Bekannt sind verschiedene Modelle von Bodenmanövriervorrichtungen. In der Regel werden sie paarweise als Set verwendet, wobei jede Kufe auf eine solche Bodenmanövriervorrichtung aufgebockt wird. Diese umfasst, je nach Modell, über ein Einzelrad oder ein Doppelrad, wobei bei letzterem je ein Rad beidseitig der Kufe angeordnet ist. Verschiedene Mechanismen sind bekannt, welche die Kufe auf die Bodenmanövriervorrichtung stellt, insbesondere elektrische, mechanische und hydraulische.

Die vorliegende Erfindung befasst sich mit Bodenmanövriervorrichtungen mit einer Hydraulikeinrichtung. Die bekannten Bodenmanövriervorrichtungen mit einer Hydraulikeinrichtung, wie z.B. in Dokument US 4600168, sind leider unhandlich zu bedienen, nicht benutzerfreundlich und nicht wartungsfreundlich.

### Darstellung der Erfindung

Es ist die Aufgabe der vorliegenden Erfindung, eine Bodenmanövriervorrichtung mit einer Hydraulikeinrichtung zu beschreiben, die benutzerfreundlich ist.

Die Aufgabe wird gelöst durch die Merkmale des unabhängigen Patentanspruchs. Weitere vorteilhafte Ausführungen sind in den Unteransprüchen angegeben.

Erfindungsgemäss ist bei einer eingangs erwähnten Bodenmanövriervorrichtung die Angriffswelle in Radlaufrichtung ausgerichtet und der Hebel für die Betätigung der Hydraulikeinrichtung erstreckt sich im Betriebszustand in Radachsrichtung, in Richtung des äusseren Rades, wobei dieser Hebel über eine Trittauflage verfügt, um bequem neben dem Helikopter stehend mit einem Fuss wiederholt auf die Trittauflage tretend die befestigte Kufe mit der Hydraulikeinrichtung auf die beiden Räder zu heben.

Der Vorteil dieser Erfindung ergibt sich dadurch, dass die Richtung, in der sich der Betätigungshebel für die Schwenkbewegung erstreckt, nicht wie bei den bekannten Bodenmanövriervorrichtungen aus dem Stand der Technik in eine Richtung parallel zu den Kufen verläuft und somit eine Bedienung dieser meist direkt über den Kufen erfordert, sondern senkrecht zur Kufe ausgerichtet ist. Da die Kufen in der Regel seitlich nahe neben dem Helikopter angeordnet sind, sind sie von der Seite her sehr gut zugänglich. Erstreckt sich der Hebel der Bodenmanövriervorrichtung, der zum Heben des Kolbens des Hydrauliksystems mittels Pumpbewegungen betätigt werden muss, senkrecht zur Achse des Helikopters, die durch seine Flugrichtung gegeben ist, so lässt sich dieser bequem mit einem Fuss bedienen, neben dem Helikopter stehend. Hingegen müssen Hebel, die parallel zur Kufe ausgerichtet sind, mühsam unter dem Helikopter bedient werden, was viel umständlicher ist.

In einer besonders bevorzugten Ausgestaltung lässt sich dieser Hebel über die senkrechte Stellung hinaus in Richtung des inneren Rades schwenken, wodurch ein Ablassventil geöffnet wird, welches die Kufe des Landegestells wieder absenkt. Dazu muss kein weiterer Hebel und keine andere Angriffsposition des Hebels vorgesehen sein.

Die erfindungsgemässe Bodenmanövriervorrichtung lässt sich im demontierten Zustand auch einfach auf seinen Rädern ziehen, indem man sie beim Laufen am Hebel im Bereich oder nahe an der Trittauflage hält.

### Kurze Beschreibung der Zeichnungen

Im Folgenden wird die Erfindung mit Bezug auf die Zeichnungen näher erklärt. Gestrichelte Linien bedeuten, dass nur der ungefähre Ort einer Komponente angegeben ist, diese aber selbst nicht sichtbar ist. Gleiche Bezugszeichen verweisen stets auf dieselben Komponenten. Es zeigen:
- Fig. 1: eine schematische perspektivische Darstellung eines Landegestells eines Helikopters mit zwei erfindungsgemässen Bodenmanövriervorrichtungen;
- Fig. 2: Eine perspektivische Darstellung einer Bodenmanövriervorrichtung neben einem Landegestell eines Helikopters;
- Fig. 3: Eine perspektivische Darstellung einer Bodenmanövriervorrichtung an einem Landegestell eines Helikopters montiert, wobei ein Rad aus Gründen der Übersichtlichkeit optisch vorgezogen ist, im Zustand mit gesenkter Kufe;
- Fig. 4: Eine Darstellung in seitlicher Ansicht einer Bodenmanövriervorrichtung an einem Landegestell eines Helikopters montiert, wobei ein Rad aus Gründen der Übersichtlichkeit optisch demontiert ist, im Zustand mit gesenkter Kufe;
- Fig. 5: Eine perspektivische Darstellung einer Bodenmanövriervorrichtung an einem Landegestell eines Helikopters montiert, wobei ein Rad aus Gründen der Übersichtlichkeit optisch vorgezogen ist, im Zustand mit angehobener Kufe;
- Fig. 6: Eine Darstellung in seitlicher Ansicht einer Bodenmanövriervorrichtung an einem Landegestell eines Helikopters montiert, wobei ein Rad aus Gründen der Übersichtlichkeit optisch demontiert ist, im Zustand mit angehobener Kufe;
- Fig. 7: Eine perspektivische Darstellung einer Bodenmanövriervorrichtung an einem Landegestell eines Helikopters montiert, im Zustand mit gesenkter Kufe;
- Fig. 8: Eine Darstellung in frontaler Ansicht einer Bodenmanövriervorrichtung an einem Landegestell eines Helikopters montiert, im Zustand mit gesenkter Kufe;
- Fig. 9: Eine perspektivische Darstellung einer Bodenmanövriervorrichtung an einem Landegestell eines Helikopters montiert, in Bedienstellung zum Heben;
- Fig. 10: Eine Darstellung in frontaler Ansicht einer Bodenmanövriervorrichtung an einem Landegestell eines Helikopters montiert, in Bedienstellung zum Heben;
- Fig. 11: Eine perspektivische Darstellung einer Bodenmanövriervorrichtung an einem Landegestell eines Helikopters montiert, im Zustand mit angehobener Kufe;
- Fig. 12: Eine Darstellung in frontaler Ansicht einer Bodenmanövriervorrichtung an einem Landegestell eines Helikopters montiert, im Zustand mit angehobener Kufe;
- Fig. 13: Eine perspektivische Darstellung einer Bodenmanövriervorrichtung an einem Landegestell eines Helikopters montiert, im Zustand beim Absenken der Kufe;
- Fig. 14: Eine Darstellung in frontaler Ansicht einer Bodenmanövriervorrichtung an einem Landegestell eines Helikopters montiert, im Zustand beim Absenken der Kufe;
- Fig. 15: Eine Explosionszeichnung einer Bodenmanövriervorrichtung;
- Fig. 16: Eine perspektivische Darstellung einer Hydraulikeinrichtung einer Bodenmanövriervorrichtung mit einer Führungsvorrichtung im Schnitt.

### Wege zur Ausführung der Erfindung

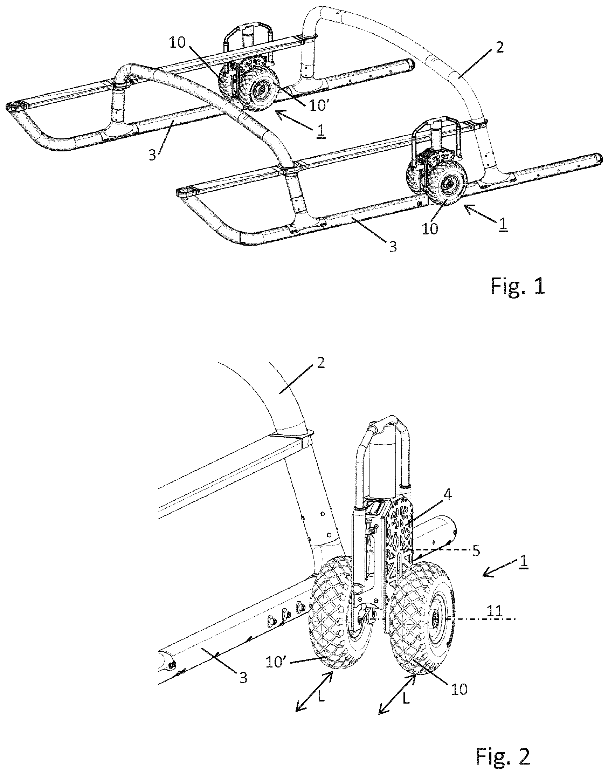

Die Fig. 1 zeigt eine schematische perspektivische Darstellung eines Landegestells 2 eines Helikopters mit zwei Kufen 3. An diesen Kufen 3 sind je eine erfindungsgemässe Bodenmanövriervorrichtung 1 montiert. Der Helikopter selbst ist aus Gründen der Übersichtlichkeit nicht dargestellt, seine Flugrichtung verläuft parallel zu den Kufen im Bild nach vorne links.

Fig. 2 zeigt einen Ausschnitt eines solchen Landegestells 2 mit einer Kufe 3, neben der eine nicht montierte, erfindungsgemässe Bodenmanövriervorrichtung 1 mit einer Hydraulikeinrichtung 5 in einem Gehäuse 4, einem äusseren Rad 10 und einem inneren Rad 10' dargestellt ist. Diese Räder 10, 10' haben eine Laufrichtung L und fluchtende, horizontale Achsen 11 und sind an gegenüberliegenden Seiten an der Hydraulikeinrichtung 5 angeordnet. Nach dem Befestigen des Gehäuses 4 an der Kufe 3 befindet sich, wie in Fig. 1 ersichtlich, jeweils das innere Rad 10' innerhalb des Landegestells 2, das heisst zwischen beiden Kufen 3, und das äussere Rad 10 ausserhalb davon, das heisst seitlich neben den Kufen 3 und neben dem Helikopter.

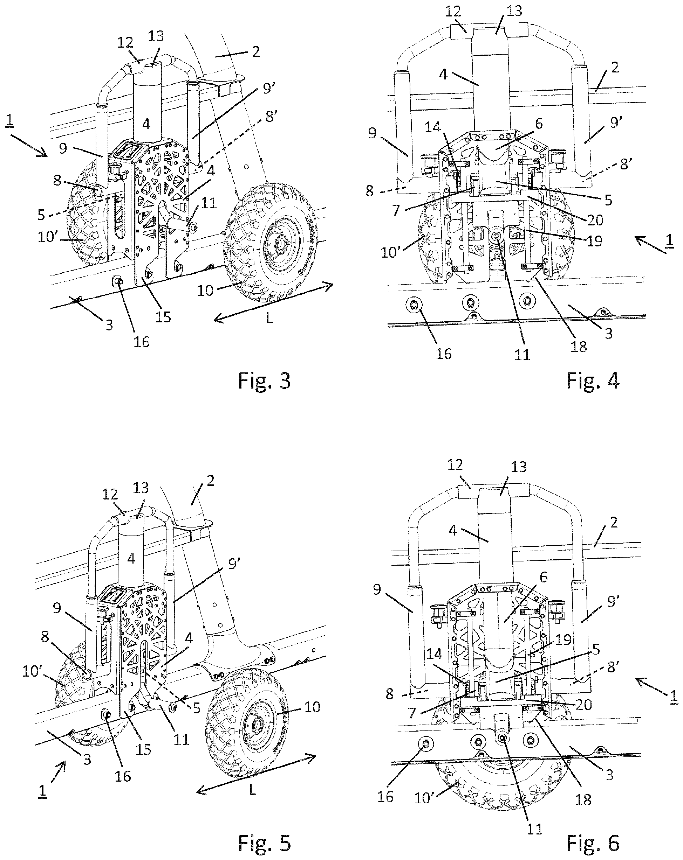

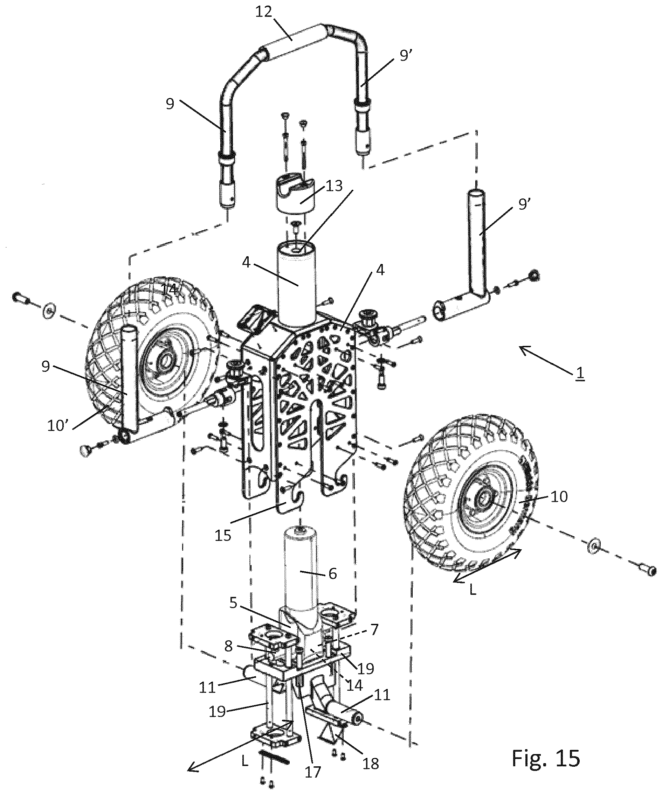

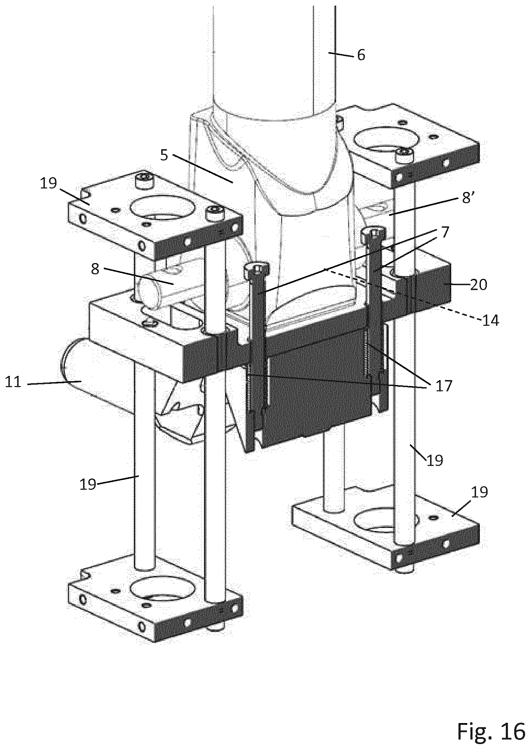

Die Figuren 3 bis 14 zeigen jeweils eine Darstellung einer montierten Bodenmanövriervorrichtung 1 gemäss dieser Erfindung zum Aufbocken jeweils einer Kufe 3 eines Helikopters, um diesen am Boden zu rangieren, in verschiedenen Zuständen und/oder Darstellungen. Anhand dieser Figuren lässt sich der Aufbau und die Funktionsweise beschreiben. Die Figuren 15 und 16 erläutern zudem den inneren Aufbau der Bodenmanövriervorrichtung 1.

Die Bodenmanövriervorrichtung 1 umfasst das Gehäuse 4 mit einer Befestigungsvorrichtung 15, dargestellt in den Figuren 3 und 5, mit welcher die Kufe 3 zugfest und wieder lösbar, vorzugsweise auch unter Spannung und dadurch rüttelfest, am Gehäuse 4 befestigt werden kann. In den vorliegenden Darstellungen ist die Befestigungsvorrichtung 15 in Form von Aufnahmehaken 15 ausgestaltet, die an mehreren Bolzen 16 an der Kufe 3 angreifen. Vorzugsweise verfügt die Befestigungsvorrichtung 15 über mindestens vier solche oder andere Angriffsstellen, wobei mindestens zwei an jeder Seite einer Kufe 3 angreifen und wobei je mindestens zwei davon in Radlaufrichtung L vor resp. hinter den Radachsen 11 angeordnet sind. Damit die Bodenmanövriervorrichtung 1 möglichst fest an der Kufe 3 angebracht werden kann, umfasst das Gehäuse 4 beispielsweise eine oder mehrere Vorspannfedern 18, welche beim Montieren der Kufe 3 gespannt werden, wie in den Figuren 4, 6 und 15 dargestellt. Diese Vorspannfedern 18 sichern den festen Halt zwischen Gehäuse 4 und Kufe 3.

Die Bodenmanövriervorrichtung 1 umfasst zudem die Hydraulikeinrichtung 5 mit einem ausfahrbaren Kolben 6 und einer ersten Angriffswelle 8, an der ein Hebel 9 zur Übertragung eines Drehmoments schwenkbar angebracht ist. Die Angriffswelle 8 ist drehbar in der Hydraulikeinrichtung 5 gelagert und betätigt diese durch ein internes Getriebe, das hier nicht dargestellt ist, indem die Welle in eine Drehbewegung versetzt wird. Nach ca. 30-40° ist ein Anschlag erreicht und die Drehbewegung wird wieder zurückgesetzt, die Angriffswelle wird demnach in beide Richtungen um ihre Achse geschwenkt. Beim wiederholten Schwenken oder Wippen dieses Hebels 9 und folglich der Angriffswelle 8 wird, mit Hilfe des inneren Getriebes und der Hydraulik, der Kolben 6 aus der Hydraulikeinrichtung 5 ausgefahren.

Die Hydraulikeinrichtung 5 ist derart beweglich im Gehäuse 4 angebracht, dass das Gehäuse 4 bei ausfahrendem Kolben 6 vertikal nach oben gestemmt wird. Vorzugsweise ist eine Führungsvorrichtung 19 mit einer darin linear beweglich angebrachten Platte 20 zwischen dem Gehäuse 4 und der Hydraulikeinrichtung 5 angeordnet, welche eine lineare Verschiebung des Gehäuses 4 zur Hydraulikeinrichtung 5 zulässt und jede andere Relativbewegung zwischen ihnen verhindert. Eine solche ist in Fig. 16 detailliert dargestellt sowie in den Figuren 4 und 6 in eingebautem Zustand. Die Hydraulikeinrichtung 5 ist fest an einer mittleren Platte 20 verbunden, welche sich in der Führungsvorrichtung 19 linear bewegen lässt. Diese ist ihrerseits fest mit dem Gehäuse 4 und somit durch die Befestigungsvorrichtung 15 mit der Kufe 3 verbunden. Die Räder 10, 10' an den Achsen 11, von denen nur die hintere dargestellt ist, sind entweder direkt an der Hydraulikeinrichtung 5 verbunden, oder, wie in Fig. 16 dargestellt und später beschrieben, über vier Führungsschrauben 7, die auf Entlastungsfedern 17 aufliegen und in Führungen auf der Platte 20 linear beweglich angebracht sind.

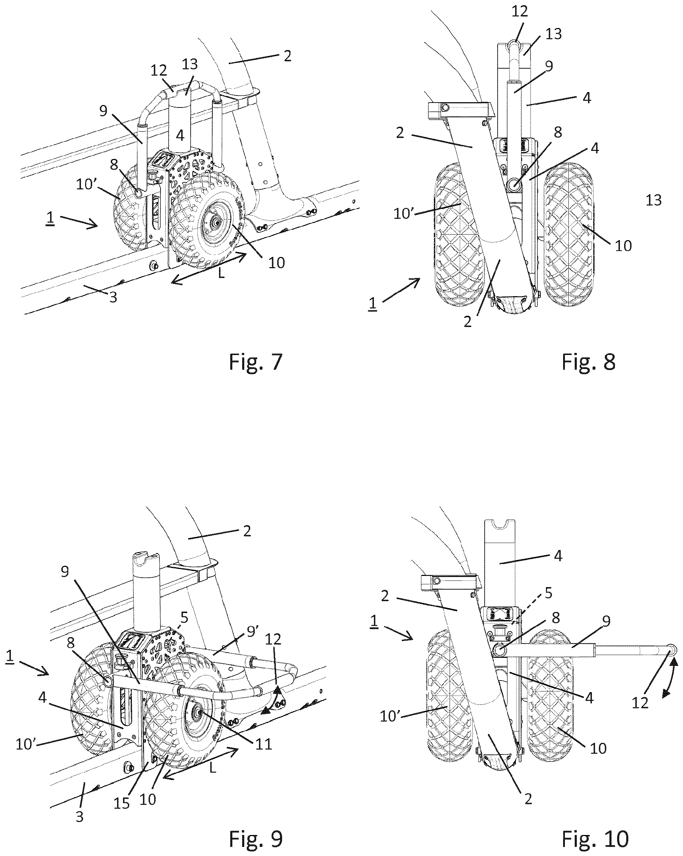

Erfindungsgemäss ist die Angriffswelle 8 und deren Achse in Radlaufrichtung L ausgerichtet und der Hebel 9 für die Betätigung der Hydraulikeinrichtung 5 erstreckt sich im Betriebszustand, dargestellt in den Figuren 9 und 10, in Radachsrichtung 11 in Richtung des äusseren Rades 10. Der Hebel 9 verfügt über eine Trittauflage 12, um bequem neben dem Helikopter stehend mit einem Fuss wiederholt auf die Trittauflage 12 tretend die befestigte Kufe 3 mit der Hydraulikeinrichtung 5 auf die beiden Räder 10, 10' zu heben. Die Bewegung der Trittauflage 12 während dieser Bedienung wird durch einen Doppelpfeil unter der Trittauflage 12 dargestellt. Typischerweise beträgt der Pumphub etwa 35°.

Eine oder mehrere Rückschlagfedern oder ähnliche Mittel, in den Figuren nicht dargestellt, sind derart an oder in der Hydraulikeinrichtung 5 angeordnet, dass sie beim Treten unter eine Vorspannung gesetzt werden, durch welche der Hebel 9 beim Entlasten wieder in eine Ausgangsposition zurückgebracht wird.

Es hat sich als vorteilhaft erwiesen, wenn die Hydraulikeinrichtung 5 gegenüber der ersten Angriffswelle 8 fluchtenden mit dieser eine zweite, gleichartige Angriffswelle 8' umfasst, an welchem ebenfalls ein schwenkbar Hebel 9' angebracht und mit der Trittauflage 12 verbunden ist, wie in allen Figuren dargestellt. Die Tretkraft wird dadurch beidseitig in die Hydraulikeinrichtung 5 eingeleitet, wodurch weitere mechanische Vorteile in der Hydraulikeinrichtung 5 entstehen, insbesondere im Getriebe. Zudem werden die Hebel 9, 9' dadurch je nur zur Hälfte belastet und die Trittauflage 12, die hier als Verbindungsrohr zwischen den Hebeln 9, 9' ausgestaltet ist, gewinnt an Stabilität. Vorzugsweise werden beide Hebel 9, 9' durch Mittel wie Rückschlagfedern wieder in ihre Ausgangsposition zurückgebracht. Diese sind nicht dargestellt, sie befinden sich innerhalb der Hydraulikeinrichtung 5.

Die Figuren 4 und 6 zeigen die beiden Extremzustände der Bodenmanövriervorrichtung 1. In Fig. 4 ist der Kolben 6 der Hydraulikeinrichtung 5 vollkommen eingefahren und daher sehr kurz. In Fig. 6 hingegen ist der Kolben 6 vollkommen ausgefahren und daher sehr lang. Durch das Ausfahren des Kolbens wird das Gehäuse 4 mit der Führungseinrichtung 19 nach oben gestemmt und mit diesem Gehäuse 4 die daran befestigte Kufe 3. Entsprechend ist die an der Hydraulikeinrichtung 5 fest verankerte bewegliche Platte 20 in der Führungseinrichtung 19 des Gehäuses 3 am unteren Rand angelangt. Das sichtbare, innere Rad 10' ist nun deutlich tiefer als die nach oben gestemmte Kufe 3.

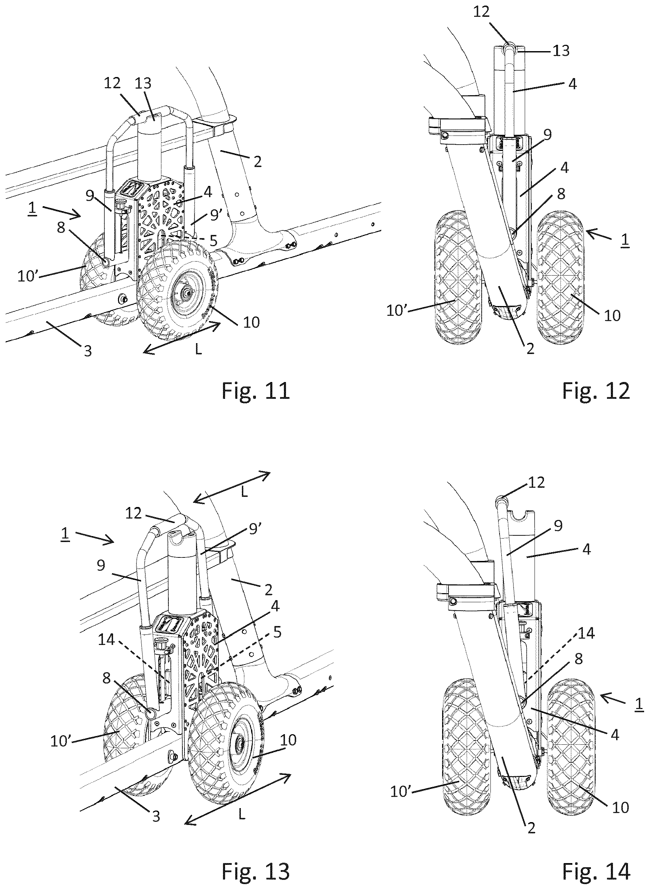

In der Folge wird die Bedienung der erfindungsgemässen Bodenmanövriervorrichtung 1 beschrieben. Die Figuren 7 und 8 zeigen den Zustand beim Anbringen und Entfernen der Bodenmanövriervorrichtung 1 an der Kufe 3, die Figuren 9 und 10 den Zustand zum Pumpen, die Figuren 11 und 12 den Zustand zum Rangieren und die Figuren 13 und 14 den Zustand beim Absenken.

Die Figuren 7 und 8 zeigen vollständige Darstellungen einer Bodenmanövriervorrichtung 1 im selben Zustand wie die Figuren 3 und 4, montiert, im Zustand mit gesenkter Kufe, in perspektivischer und in frontaler Ansicht.

Das Gehäuse 4 verfügt über eine Arretiervorrichtung 13, welche den oder die Hebel 9, 9' in senkrecht nach oben geschwenkter Richtung arretieren kann, vorzugsweise an deren Trittauflage 12. Diese Arretierung kann, wie dargestellt, lediglich aus einer Vertiefung im Gehäuse 4 bestehen, in der die Trittauflage 12 eingelegt wird. Andere Arretierungen, insbesondere mechanische oder magnetische, sind auch denkbar. Beim Manövrieren und im Hangar empfiehlt es sich, die Hebel 9, 9' in senkrecht nach oben geschwenkter Richtung zu arretieren, aus Platzgründen und um Stolpergefahr von Passanten zu vermeiden.

Die Figuren 9 und 10 zeigen wiederum Darstellungen einer Bodenmanövriervorrichtung 1 im selben Zustand wie die Figuren 7 und 8, montiert, allerdings in dem Betriebszustand, in dem die Kufe 3 angehoben werden kann.

Um, ausgehend von der Situation nach den Figuren 7 und 8, die Bodenmanövriervorrichtung 1 in Betriebszustand zu bringen, wird die Arretiervorrichtung 13 gelöst und der oder die Hebel 9, 9' mit der Trittauflage 12 werden um 90° von der vertikalen in die horizontale Stellung gebracht, in Richtung der Radachsrichtung 11 des äusseren Rades 10, neben den Helikopter. Erfindungsgemäss ist diese Schwenkbewegung des oder der Hebel 9, 9' um 90° in beide Richtungen im Freilauf möglich. Bei dieser Bewegung wird keine Änderung am aktuellen Hub vorgenommen.

Vorzugsweise sind der oder die Hebel 9, 9' längenverstellbar, beispielsweise teleskopartig. In diesem Fall entfernt sich die Trittauflage 12 von der Bodenmanövriervorrichtung 1, wodurch die Hebelwirkung beim Treten verstärkt wird.

Nach dem Schwenken der Hebel 9, 9' in die horizontale Lage ist die Bodenmanövriervorrichtung 1 bereit für die Betätigung der Hydraulikeinrichtung. Ein Benutzer kann sich neben den Helikopter stellen und so oft auf die Trittauflage 12 treten, bis die Kufe 3 die gewünschte Höhe erreicht hat. Sobald der Kolben 6 maximal ausgefahren ist, haben weitere Tretbewegung keine Wirkung mehr. Ein Hub umfasst dabei etwa 35°, +/- 5°, was als angenehm empfunden wird. Ein Rückstellelement, beispielsweise eine Feder, sorgt nach jedem Tritt für die Rückführung der Trittauflage 12 in die horizontale Stellung, wiederum ohne Wirkung. Anschliessend, wenn die gewünschte Höhe der Kufe 3 erreicht ist, kann die Trittauflage 12 an den Hebeln 9, 9' im Freilauf wieder in die senkrechte Stellung gebracht und an der Arretiervorrichtung 13 fixiert werden, wie in den Figuren 11 und 12 dargestellt. Wenn die Hebel 9, 9' wie vorgeschlagen teleskopartig verlängert wurden, passen sie auch in der angehobenen Stellung mit ausgefahrenem Kolben 6 und daher mit gehobenem Gehäuse 4 in die Arretiervorrichtung 13.

Dieser Vorgang wird mit einer zweiten Bodenmanövriervorrichtung 1, die an der zweiten Kufe 3 ebenso befestigt ist, wiederholt. Nun kann der Helikopter, auf den vier Rädern (10, 10') stehend, ins Gleichgewicht gebracht und so manövriert werden. Die Figuren 11 und 12 stellen den Rangierzustand dar.

Zum erneuten Absenken der Kufe 3 wird, wie in den Figuren 13 und 14 dargestellt, der oder die Hebel 9, 9' weiter nach innen geschwenkt, vorzugsweise um etwa 5-10°. Dazu werden dieser oder diese über die senkrechte Stellung hinaus in Richtung des inneren Rades 10' geschwenkt, wodurch ein Ablassventil 14 der Hydraulikeinrichtung 5, welches entsprechend derart vorgesehen ist, geöffnet wird. Dazu muss keine weitere Vorrichtung an der Hydraulikeinrichtung 5 vorgesehen sein; und diese muss nicht aufwändig umgebaut werden, damit die Kufe 3 wieder abgesenkt werden kann. Nach dem vollständigen Absenken der Kufe können der oder die Hebel 9, 9' wieder arretiert werden, der Zustand gemäss den Figuren 7 und 8 ist wieder erreicht. Die Ablassgeschwindigkeit ist dazu vorzugsweise werksmässig fest eingestellt. Dadurch besteht keine Gefahr, dass der Helikopter durch zu schnelles ablassen am Boden aufschlägt und beschädigt wird. Somit können auch ungeschulte Personen die Vorrichtung benutzen.

In einer bevorzugten Ausgestaltung der Erfindung sind die fluchtenden Achsen 11 mit den Rädern 10, 10' nicht direkt an der Hydraulikeinrichtung 5 angebracht, sondern, wie in Fig. 16 dargestellt, mittels mehreren, insbesondere vier Führungsschrauben 7, die auf Entlastungsfedern 17 aufliegen, wie in Fig. 16 dargestellt. Dies führt dazu, dass die Hydraulikeinrichtung 5 und das Gehäuse 3 der Bodenmanövriervorrichtung 1, wenn diese an einem der Hebel 9, 9' oder an der Trittauflage 12 zum Transportieren gezogen wird, angehoben wird. Dadurch lässt sich die Bodenmanövriervorrichtung 1 bequem ziehen, ohne dass die Befestigungsvorrichtung 15 am Boden anstehen kann. Im Idealfall kann die Bodenmanövriervorrichtung 1 auf der Befestigungsvorrichtung 15 am Boden stehen, wenn keiner der Hebel 9, 9' oder die Trittauflage 12 angehoben werden.

### Bezugszeichenliste

- 1: Bodenmanövriervorrichtung
- 2: Landegestell eines Helikopters
- 3: Kufe
- 4: Gehäuse
- 5: Hyadraulikeinrichtung
- 6: Kolben
- 7: Führungsschraube
- 8 8': Angriffswelle
- 9 9': Hebel
- 10 10': Rad
- 11: Achse, Radachsrichtung
- 12: Trittauflage
- 13: Arretiervorrichtung
- 14: Ablassventil (selbst nicht erkennbar)
- 15: Befestigungsvorrichtung, Aufnahmehaken
- 16: Bolzen
- 17: Entlastungsfeder
- 18: Vorspannfeder
- 19: Führungsvorrichtung
- 20: bewegliche, mittlere Platte

- L: Laufrichtung eines Rades

## Patentansprüche

1. Bodenmanövriervorrichtung (1) zum Aufbocken jeweils einer Kufe (3) eines Landegestells (2) eines Helikopters, um diesen am Boden zu rangieren, umfassend ein Gehäuse (4) mit einer Befestigungsvorrichtung (15), an der zugfest eine Kufe (3) befestigt werden kann, eine Hydraulikeinrichtung (5) mit einem ausfahrbaren Kolben (6) und einer ersten Angriffswelle (8), an der ein Hebel (9) zur Übertragung eines Drehmoments schwenkbar angebracht ist, beim Wippen des Hebels (9) der Kolben (6) aus der Hydraulikeinrichtung (5) ausgefahren wird und wobei die Hydraulikeinrichtung (5) derart beweglich im Gehäuse (4) angebracht ist, dass das Gehäuse (4) bei ausfahrendem Kolben (6) vertikal nach oben gestemmt wird, sowie je ein äusseres und ein inneres Rad (10, 10') an zwei fluchtenden horizontalen Achsen (11) an gegenüberliegenden Seiten an der Hydraulikeinrichtung (5), die nach dem Befestigen des Gehäuses (4) an der Kufe (3) innerhalb resp. ausserhalb neben der Kufe (3) angeordnet sind, **dadurch gekennzeichnet, dass** die Angriffswelle (8) in Radlaufrichtung (L) ausgerichtet ist und sich der Hebel (9) für die Betätigung der Hydraulikeinrichtung (5) im Betriebszustand in Radachsrichtung (11) in Richtung des äusseren Rades (10) erstreckt und über eine Trittauflage (12) verfügt, um bequem neben dem Helikopter stehend mit einem Fuss wiederholt auf die Trittauflage (12) tretend die befestigte Kufe (3) mit der Hydraulikeinrichtung (5) auf die beiden Räder (10, 10') zu heben.

2. Vorrichtung nach Anspruch 1, **dadurch gekennzeichnet, dass** die Hydraulikeinrichtung (5) gegenüber der ersten Angriffswelle (8) fluchtenden mit dieser eine zweite, gleichartige Angriffswelle (8') umfasst, an welchem ebenfalls ein schwenkbar Hebel (9') angebracht und mit der Trittauflage (12) verbunden ist.

3. Vorrichtung nach Anspruch 1 oder 2, **gekennzeichnet durch** eine Arretiervorrichtung (13), welche den oder die Hebel (9, 9') in senkrecht nach oben geschwenkter Richtung arretieren kann, vorzugsweise an seiner Trittauflage (12).

4. Vorrichtung nach einem der vorhergehenden Ansprüche, **dadurch gekennzeichnet, dass** der oder die Hebel (9, 9') mit der Trittauflage (12) um 90° von der vertikalen in die horizontale Stellung, in Richtung der Radachsrichtung (11) des äusseren Rades (10), neben den Helikopter gebracht werden kann und zurück, vorzugsweise im Freilauf, sodass bei dieser Bewegung keine Änderung am aktuellen Hub vorgenommen wird.

5. Vorrichtung nach einem der vorhergehenden Ansprüche, **dadurch gekennzeichnet, dass** der oder die Hebel (9, 9') über die senkrechte Stellung hinaus in Richtung des inneren Rades (10') schwenkbar ist und dass die Hydraulikeinrichtung (5) über ein Ablassventil (14) verfügt, das bei dieser Hebelstellung geöffnet ist.

6. Vorrichtung nach einem der vorhergehenden Ansprüche, **dadurch gekennzeichnet, dass** der oder die Hebel (9, 9') längenverstellbar sind.

7. Vorrichtung nach einem der vorhergehenden Ansprüche, **dadurch gekennzeichnet, dass** durch die Befestigungsvorrichtung (15) die Kufe (3) unter Spannung und wieder lösbar am Gehäuse (4) befestigt werden kann.

8. Vorrichtung nach Anspruch 7, **dadurch gekennzeichnet, dass** die Befestigungsvorrichtung (15) über mindestens vier Angriffsstellen, die vorzugsweise zu Aufnahmehaken ausgebildet sind, verfügt, wobei zwei an jeder Seite einer Kufe (3) angreifen können und wobei je zwei davon in Radlaufrichtung (L) vor resp. hinter den Radachsen (11) angeordnet sind.

9. Vorrichtung nach Anspruch 7 oder 8, **dadurch gekennzeichnet, dass** das Gehäuse (4) eine oder mehrere Vorspannfedern (18) umfasst, welche beim Montieren der Kufe (3) gespannt werden.

10. Vorrichtung nach einem der vorhergehenden Ansprüche, **gekennzeichnet durch** eine Führungsvorrichtung (19) zwischen dem Gehäuse (4) und der Hydraulikeinrichtung (5), welche eine lineare Verschiebung des Gehäuses (4) zur Hydraulikeinrichtung (5) zulässt und jede andere Relativbewegung zwischen ihnen verhindert.

11. Vorrichtung nach einem der vorhergehenden Ansprüche, **dadurch gekennzeichnet, dass** die fluchtenden Achsen (11) mit den Rädern (10, 10') mittels mehreren, insbesondere vier Führungsschrauben (7), die auf Entlastungsfedern (17) aufliegen, an der Hydraulikeinrichtung (5) angebracht sind.

## Claims

1. A ground manoeuvering device (1) for jacking up in each case a skid (3) of a landing gear (2) of a helicopter, in order to manoeuvre the latter on the ground, comprising a housing (4) with a fastening device (15), to which a skid (3) can be fastened tension-proof, a hydraulic apparatus (5) with an extendable piston (6) and a first engagement shaft (8), to which a lever (9) is attached in a swivellable manner for the transmission of a torque, the piston (6) is extended from the hydraulic apparatus (5) when the lever (9) is rocked, and wherein the hydraulic apparatus (5) is fitted movably in the housing (4) in such a way that the housing (4) is lifted vertically upwards when the piston (6) is extended, as well as an outer wheel and an inner wheel (10, 10') on two aligned horizontal axles (11) at opposite sides on the hydraulic apparatus (5), which wheels, after the fastening of the housing (4) to the skid (3), are arranged beside the skid (3) respectively on the inside and on the outside, **characterised in that** the engagement shaft (8) is aligned in the wheel running direction (L) and the lever (9) for the operation of the hydraulic apparatus (5) extends, in the operating state, in the wheel axle direction (11) in the direction of the outer wheel (10) and comprises a tread section (12), in order to raise the fastened skid (3) onto the two wheels (10, 10') using the hydraulic apparatus (5) while standing conveniently beside the helicopter repeatedly stepping with the foot on the tread section (12).

2. The device according to claim 1, **characterised in that** the hydraulic apparatus (5) comprises, aligned with respect to the first engagement shaft (8), a second, identical engagement shaft (8'), to which a swivellable lever (9') is also fitted and connected to the tread section (12).

3. The device according to claim 1 or 2, **characterised by** a locking device (13), which can lock the lever or levers (9, 9') in the direction swivelled vertically upwards, preferably at its tread section (12).

4. The device according to any one of the preceding claims, **characterised in that** the lever or levers (9, 9') with the tread section (12) can be brought through 90° from the vertical into the horizontal position, in the direction of the wheel axle direction (11) of the outer wheel (10), beside the helicopter and back, preferably in the freewheeling state, so that no change to the current stroke is carried out during this movement.

5. The device according to any one of the preceding claims, **characterised in that** the lever or levers (9, 9') are swivelled beyond the vertical position in the direction of inner wheel (10') and that the hydraulic apparatus (5) comprises a drainage valve (14) which is opened with this lever position.

6. The device according to any one of the preceding claims, **characterised in that** the lever or levers (9, 9') are variable in length.

7. The device according to any one of the preceding claims, **characterised in that** the skid (3) can be fastened to the housing (4) under tension and detachable again by means of the fastening device (15).

8. The device according to claim 7, **characterised in that** the fastening device (15) comprises at least four engagement points, which are preferably constituted in the form of support hooks, wherein two can engage at each side of a skid (3) and wherein in each case two thereof are arranged in front of and respectively behind the wheel axles (11) in wheel running direction (L).

9. The device according to claim 7 or 8, **characterised in that** the housing (4) comprises one or more pretensioning springs (18), which are put under tension when skid (3) is mounted.

10. The device according to any one of the preceding claims, **characterised by** a guide device (19) between the housing (4) and the hydraulic apparatus (5), which permits a linear displacement of the housing (4) with respect to the hydraulic apparatus (5) and prevents any other relative movement between them.

11. The device according to any one of the preceding claims, **characterised in that** the aligned axles (11) with the wheels (10, 10') are fitted to the hydraulic apparatus (5) by means of a plurality, in particular four guide screws (7), which rest on retrieving springs (17).

## Revendications

1. Dispositif de manœuvre au sol (1) pour le soulèvement respectivement d'un patin (3) d'un cadre d'atterrissage (2) d'un hélicoptère pour ranger celui-ci au sol, comprenant un boîtier (4) comportant un dispositif de fixation (15) auquel un patin (3) résistant à la traction peut être fixé, un système hydraulique (5) comportant un piston extractible (6) et un premier arbre d'attaque (8) au niveau duquel un levier (9) est installé de manière à pouvoir pivoter pour transmettre le couple de rotation, le piston (6) est sorti du système hydraulique (5) en cas de basculement du levier (9), le système hydraulique (5) étant installé de manière mobile dans le boîtier (4) de manière à ce que le boîtier (4), lorsque le piston est sorti (6), soit soulevé verticalement vers le haut, et chaque fois une roue extérieure et une roue intérieure (10,10') au niveau de deux essieux horizontaux alignés (11) sur des faces opposées au niveau du système hydraulique (5), lesquelles roues, après fixation du boîtier (4) au niveau du patin (3), sont disposées à l'intérieur ou à l'extérieur près du patin (3), **caractérisé en ce que** l'arbre d'attaque (8) est orienté dans le sens de circulation des roues (L) et que le levier (9) servant à l'actionnement du système hydraulique (5), en état de fonctionnement, s'étend dans le sens de l'essieu des roues (11) en direction de la roue extérieure (10) et dispose d'une marche (12) afin de, en étant debout près de l'hélicoptère, en montant à répétition avec un pied sur la marche (12), lever le patin fixé (3) avec le système hydraulique (5) sur les deux roues (10,10').

2. Dispositif selon la revendication 1, **caractérisé en ce que** le système hydraulique (5) comprend, en face du premier arbre d'attaque (8), en alignement avec celui-ci, un second arbre d'attaque similaire (8') au niveau duquel un levier pivotable (9') est également installé et connecté à la marche (12).

3. Dispositif selon la revendication 1 ou 2, **caractérisé par** un dispositif d'arrêt (13) qui peut arrêter le ou les leviers (9, 9') dans le sens pivoté verticalement vers le haut, de préférence au niveau de sa marche (12).

4. Dispositif selon une des revendications précédentes, **caractérisé en ce que** le ou les leviers (9, 9') peuvent être amenés près de l'hélicoptère et en retour avec la marche (12) à raison de 90° depuis la position horizontale en direction du sens de l'essieu des roues (11) de la roue extérieure (10), de préférence en roue libre, de sorte qu'aucune modification de la course actuelle n'est effectuée lors de ce mouvement.

5. Dispositif selon une des revendications précédentes, **caractérisé en ce que** le ou les leviers (9, 9') sont pivotables au-delà de la position verticale en direction de la roue intérieure (10') et que le système hydraulique (5) dispose d'une soupape d'évacuation (14) qui est ouverte dans le cas de cette position de levier.

6. Dispositif selon une des revendications précédentes, **caractérisé en ce que** le ou les leviers (9, 9') sont réglables en longueur.

7. Dispositif selon une des revendications précédentes, **caractérisé en ce que**, grâce au dispositif de fixation (15), le patin (3) peut être fixé sous tension et de manière redissociable au boîtier (4).

8. Dispositif selon la revendication 7, **caractérisé en ce que** le dispositif de fixation (15) dispose d'au moins quatre points d'attaque qui sont de préférence conçus sous forme de crochets récepteurs, deux pouvant attaquer au niveau de chaque face d'un patin (3) et deux parmi ceux-ci étant disposés dans le sens de circulation radial (L) en amont ou en aval des essieux de roues (11).

9. Dispositif selon la revendication 7 ou 8, **caractérisé en ce que** le boîtier (4) comprend un ou plusieurs ressorts de précontrainte (18) qui sont tendus lors du montage du patin (3).

10. Dispositif selon une des revendications précédentes, **caractérisé par** un dispositif de guidage (19) situé entre le boîtier (4) et le système hydraulique (5) et qui permet un décalage linéaire du boîtier (4) par rapport au système hydraulique (5) et empêche tout autre mouvement relatif entre eux.

11. Dispositif selon une des revendications précédentes, **caractérisé en ce que** les essieux alignés (11) comportant les roues (10,10') sont installés au moyen de plusieurs, en particulier quatre, vis de guidage (7) qui reposent sur des ressorts de délestage (17) au niveau du système hydraulique (5).
